Europäisches Patentamt

European Patent Office

Office européen des brevets

(19)

(11) Publication number:  **0 404 211**

**A1**

(12) **EUROPEAN PATENT APPLICATION**

(21) Application number: **90201074.3**

(22) Date of filing: **27.04.90**

(51) Int. Cl.⁵: **E21B 43/26**

(30) Priority: **01.05.89 US 345492**

(43) Date of publication of application:
**27.12.90 Bulletin 90/52**

(84) Designated Contracting States:
**DE FR GB IT NL**

(71) Applicant: **PUMPTECH N.V.**
**Atlantic House Noorderlaan 147 Bus 5C**
**B-2030 Antwerpen(BE)**
(84) **DE GB IT NL**

Applicant: **COMPAGNIE DES SERVICES**
**DOWELL SCHLUMBERGER**
**50, Avenue Jean Jaurès B.P. 360**
**F-92541 Montrouge Cédex(FR)**
(84) **FR**

(72) Inventor: **Gulbis, Janet**
**7374 E. 25th place**
**Tulsa, OK(US)**
Inventor: **Williamson, Trevor D.A.**
**2964 East 76th Street**
**Tulsa, OK(US)**
Inventor: **King, Milton T.**
**3853 S. 88th East Place**
**Tulsa, OK(US)**
Inventor: **Constien, Vernon G.**
**Rt. 1, Box 706**
**Sperry, OK(US)**

(74) Representative: **Richebourg, Michel François**
**Etudes et Fabrication Dowell Schlumberger**
**Z.I. Molina La Chazotte B.P. 90**
**F-42003 Saint-Etienne Cédex 1(FR)**

(54) **Method of controlling release of encapsulated breakers. ·**

(57) A fracturing fluid composition containing: a fracturing fluid; an encapsulated breaker which is released into the fracturing fluid at a predetermined time/temperature condition to reduce the viscosity of the fracturing fluid; and a scavenging material contained in the fracturing fluid for reacting with the breaker released into the fracturing fluid before the predetermined time/temperature condition.

# EFFECTS OF COATING THICKNESS AND SCAVENGER

## 175°F BATH TESTS

FIG. 1

## METHOD OF CONTROLLING RELEASE OF ENCAPSULATED BREAKERS

### Field of the Invention

The invention relates to improved fracturing fluids containing an encapsulated breaker and an improved method of fracturing subterranean formations penetrated by a wellbore using these fracturing fluid systems containing a breaker.

### Technology Review

It is desirable to stimulate the production of hydrocarbons from subterranean formations penetrated by a wellbore. A common method of increasing productivity of a hydrocarbon-bearing formation is to subject the formation to a fracturing treatment. This fracturing treatment is produced by injecting a liquid, gas, or two-phase fluid, which is generally referred to as a fracturing fluid, down the wellbore at a sufficient pressure and flow rate to fracture the subterranean formation. A proppant material such as sand, fine gravel, sintered bauxite, glass beads and the like can be introduced into the fracture to keep it open. The propped fracture provides larger flow channels through which an increased quantity of hydrocarbon can flow, thereby increasing the productivity of the well.

After the fracturing treatment is complete and the proppant has been placed, breakers may be used to reduce fluid viscosity and promote the return of the fracturing fluid to the wellbore. It is desirable that the breaker not affect fluid viscosity during pumping, but rapidly reduce fluid viscosity after pumping is completed.

Unfortunately, typical breakers such as enzymes and persulfates currently used in fracturing fluids do not produce the desired viscosity profile. Enzymes, for example, begin to reduce fluid viscosity immediately. Persulfate breakers, on the other hand, react very slowly at surface temperatures. The reaction rate increases with temperature so that after the fracturing fluid reaches about 60°C (140°F), the reaction between the persulfate and fracturing fluid goes rapidly causing premature viscosity loss.

U.S. Patent 4,741,401 describes a method of delaying the time at which an aqueous fracturing composition will break by encapsulating the breaker in a water-insoluble, essentially water-impermeable material which, after sufficient exposure to the fracturing fluid, will rupture and release the breaker.

U.S. Patent 4,552,675 describes a method of delaying the time at which an aqueous fracturing composition will break by adding an organic hydroxyl free radical scavenger such as allyl alcohol, catechol, and 1,10-orthophenanthroline to retard the action of a peroxygen breaker. This patent acknowledges that the efficacy of an organic hydroxyl compound as a free radical scavenger is known to vary markedly with the system in which it is used, citing C. Walling, Free Radicals in Solution, page 36 (John Wiley & Sons, New York 1957).

U.S. Patent 4,506,734 describes a method of delaying the time at which an aqueous fracturing composition will break by encapsulating the breaker within hollow or porous, crushable beads made from glass, ceramics, plastics, gels, or mixtures thereof.

U.S. Patent 4,202,795 describes a method of delaying the time at which a high viscosity aqueous gel or emulsion will break by encapsulating the breaker in a hydratable gelling agent which forms a protective gel around the breaker.

Even though the breaker has been encapsulated, some release may occur prematurely because of poorly coated particles or because of damage to the coating in the feeders, pumps and tubing used in fracturing operations. It would be advantageous to provide a new and improved method for fracturing subterranean formations using fracturing fluids containing an encapsulated breaker which can be more accurately controlled to release breaker at a predetermined time/temperature.

It would be economically advantageous to be able to reduce the coating thickness for encapsulated breakers. Reduced coating thickness might produce premature release, so a scavenging material would be necessary to allow use of cheaper, thinner-coated breaker.

### SUMMARY OF THE INVENTION

It is an object of the present invention to solve the problems of controlling the release of encapsulated breaker by incorporating materials into the fracturing fluid which react with and delay premature action of the breaker in reducing fracturing fluid viscosity.

The present invention provides fracturing fluid composition which includes: a fracturing fluid; an encapsulated breaker which is released into the fracturing fluid under a predetermined time/temperature condition to reduce the viscosity of the fracturing fluid; and a scavenging material contained in the fracturing fluid for reacting with any breaker released into the fracturing fluid before said predetermined time/temperature condition. As used herein, a predetermined time/temperature condition is a predetermined time and/or temperature condition or a stress condition caused by fracture closure at which an operator intends to release breaker into a fracturing fluid to reduce the viscosity of the fracturing fluid.

By reacting with the released breaker, the scavenging material prevents the breaker from prematurely reacting with the fracturing fluid polymer to reduce the viscosity of the fracturing fluid.

Also, because the premature release of breaker is neutralized by the scavenging material, the present invention also allows a reduced coating thickness of encapsulating material surrounding the breaker.

## BRIEF DESCRIPTION OF DRAWINGS

Figure 1 shows the effects of breaker coating thickness and the presence of a scavenger on fracturing fluid viscosity for a fluid containing 60 lb/Mgal hydroxypropyl guar (HPG). The core material is ammonium persulfate (APS). As used herein, Mgal is an abbreviation for 1000 gallons (U.S.).

Figure 2 shows how KCl concentration in the fracturing fluid solution affects the effectiveness of sodium dimethyldithiocarbamate (SDD) as a scavenger for APS.

Figure 3 shows effects of SDD concentration on the viscosity of the fracturing fluid solution containing APS at 80°C (175°F).

Figure 4 shows effects of SDD concentration on the viscosity of the fracturing fluid solution containing APS at 90°C (195°F).

Figure 5 shows the performance of sodium thiosulfate (ST) as a scavenger for APS.

Figure 6 shows the performance of triethanolamine as a scavenger for APS in the absence of KCl.

Figure 7 shows the performance of triethanolamine as a scavenger for APS in the presence of KCl.

## DETAILED DESCRIPTION OF THE PREFERRED EMBODIMENTS

The encapsulated breaker/scavenger system of the present invention may be used with linear and crosslinked aqueous fracturing fluids to provide both maximum viscosity during pumping and rapid viscosity decline after pumping stops. The release rate of the encapsulated breaker varies with temperature, so the scavenger concentration is preferably adjusted for temperature and pump time.

The overall composition of the fracturing fluid solution is important to the success of the scavenger. To be effective, the scavenger should react faster with the breaker than the breaker reacts with the fracturing fluid polymer. A preferred fracturing fluid for use as the base of the solution is guar or hydroxyproplguar (HPG). Preferably the fracturing fluid base is present at a concentration of between about 20 and about 70 lb/Mgal, more preferably at a concentration of from about 30 to about 50 lb/Mgal. The fracturing fluid solution may also contain one or more antifoam agents, bactericides, surfactants or an acid or a base to adjust pH. In addition, the solution preferably contains a salt such as KCl at a concentration of from about 0.5 to about 5; most preferably 2% by weight.

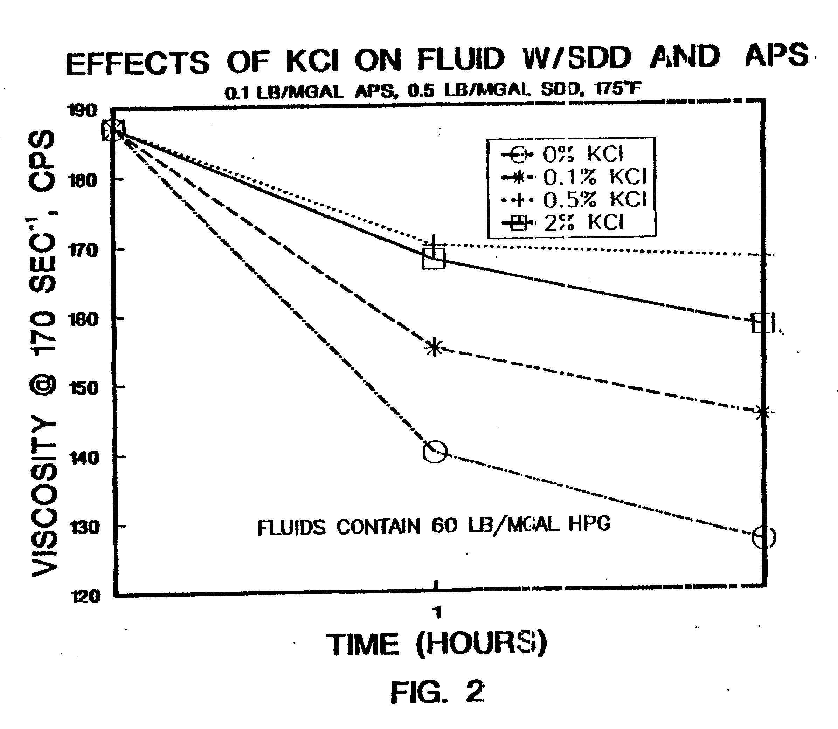

Materials such as salts which affect the reaction rates of the breaker or of the scavenger can be beneficial to scavenging. As shown in Figure 2, SDD is a much more effective scavenger for APS in the presence of KCl. Other salts which might be beneficial are NaCl, $MgCl_2$, $CaCl_2$, $NH_4Cl$, KI, and KBr.

The encapsulated breaker is generally used at a concentration of from about 0.1 to about 50 lb/Mgal (active) and preferably at a concentration from about 1 to about 10 lb/Mgal.

Any breaker released prior to the predetermined time/temperature condition must be scavenged. Breaker which is not scavenged will cause premature loss of viscosity. On the other hand, if too much scavenger is used, breaking will be delayed and will not be as complete. A portion of the breaker and of the scavenger will be wasted.

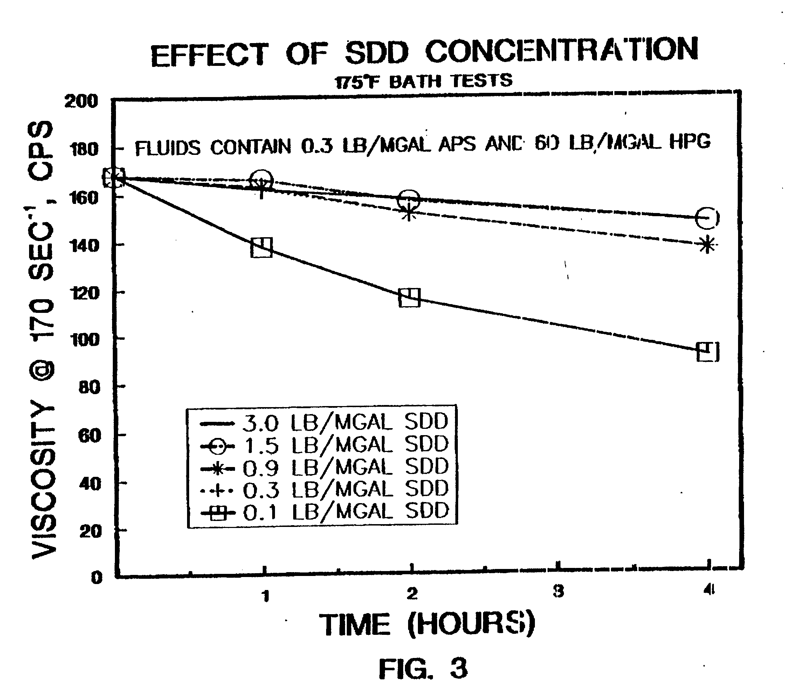

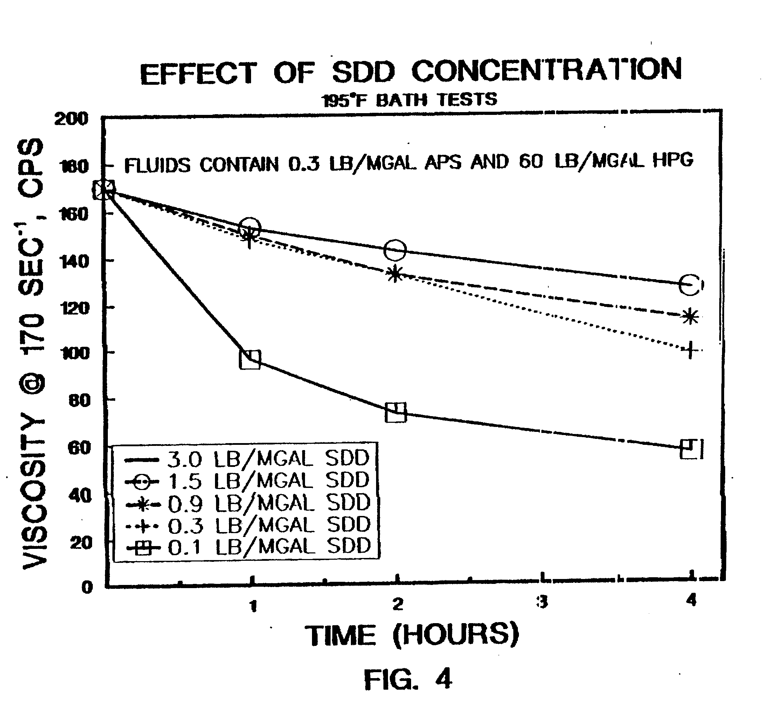

The amount of breaker scavenged is generally from about 1 to about 30%, preferably from about 1 to about 20%. The concentration of scavenger will depend on the breaker used, but should range from about 0.01 to about 30 lb/Mgal, preferably from about 0.1 to about 10 lb/Mgal. In the SDD/ammonium persulfate system, the preferred weight ratio of SDD to released persulfate is approximately 1 to 1. See Figures 3 and 4.

Desirably, the scavenger material employed should react rapidly with the breaker to prevent it from reacting with the fracturing fluid polymer. When the gelling agent used in the fracturing fluid is guar or hydroxypropylguar (HPG) and the breaker is ammonium persulfate, the preferred scavenger is sodium dimethyldithiocarbamate (SDD). Preferably, SDD is used in combination with an encapsulated breaker of ammonium persulfate coated with polyvinylidene and methylmethacrylate copolymer (PVDC).

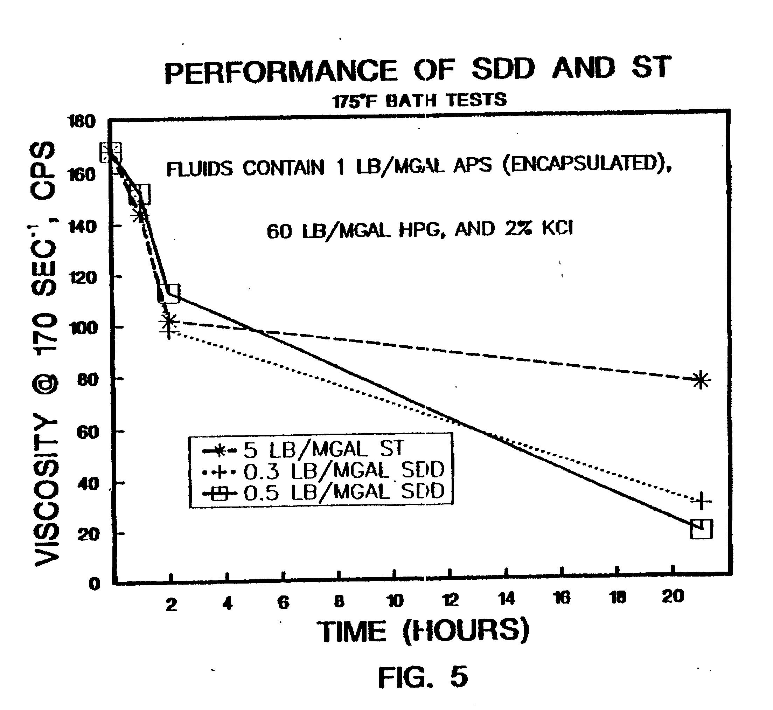

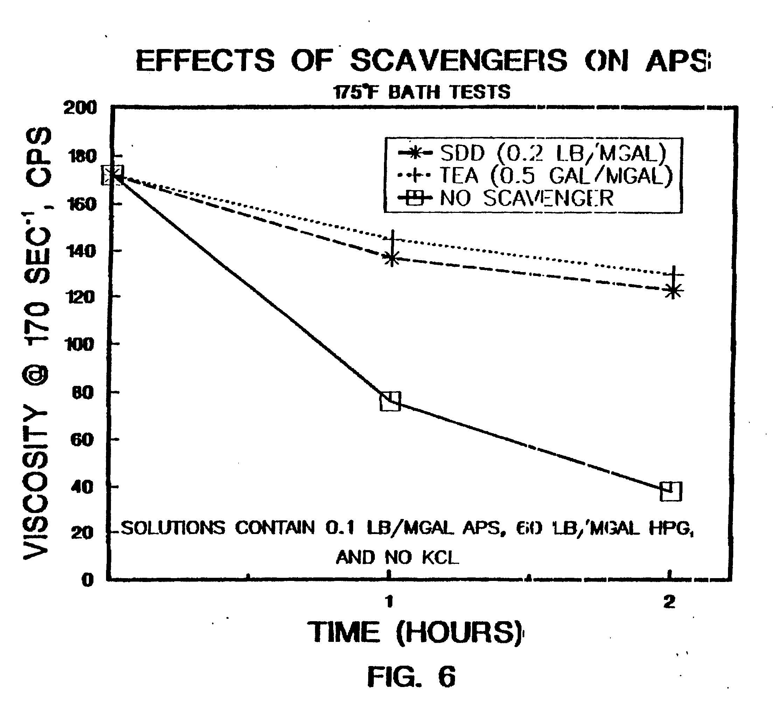

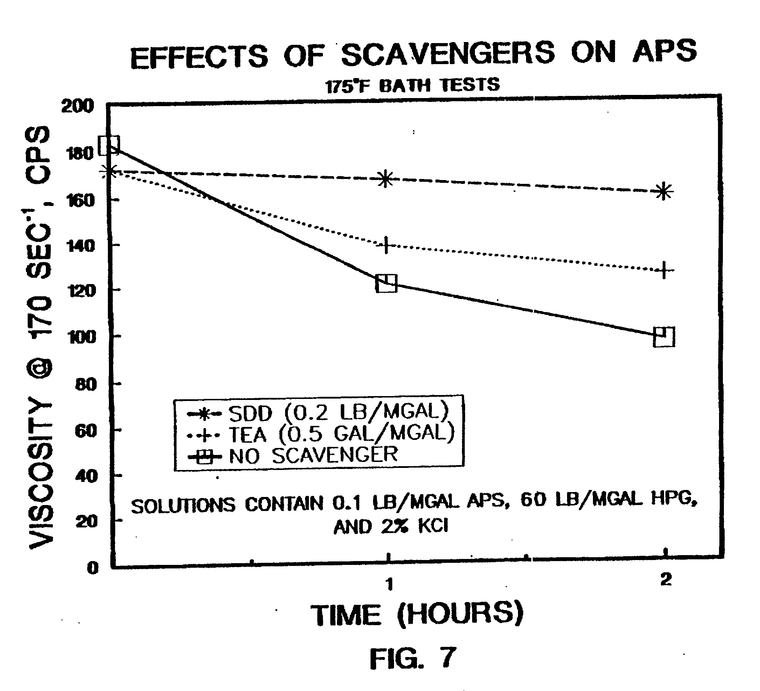

While a guar-PVDC/ammonium persulfate-SDD system is described above, the utility of the polymer-encapsulated breaker-scavenger system of the invention is not limited to this embodiment. For instance, another suitable scavenger for the purposes of the invention is sodium thiosulfate as shown in Figure 5. Triethanolamine may also be used as a scavenger, especially when KCl is not present in the fracturing fluid solution. See Figures 6 and 7.

Those skilled in the art may easily determine whether another material is an effective scavenger for a specific fracturing fluid and a specific breaker. As mentioned above, the overall composition of the fracturing fluid solution is important to the success of the scavenger. It has been found that generally both the fracturing fluid composition and the breaker composition affect scavenger performance in the practice of the present invention. Therefore to determine whether a particular material is an effective scavenger, the following method may be used:

(1) Prepare the desired fracturing fluid.

(2) Add the desired unencapsulated breaker to a portion of the fracturing fluid. This should represent the quantity of breaker which must be scavenged. Add encapsulated breaker and scavenger to another portion of the fracturing fluid.

(3) Place both samples in glass bottles and heat in a shaker bath at the test temperature for the desired scavenging time.

(4) Cool the samples to ambient temperature and measure the viscosities with a viscometer, for example a Fann 35-brand viscometer.

(5) If the tested scavenger is effective for the desired fracturing fluid at the test temperature and period of time, then the viscosity of the solution containing breaker plus scavenger will be higher than the viscosity of the solution for the breaker-only sample. Different concentration ratios of scavenger to breaker may be tested to determine optimum concentration. For temperatures above 100°C (212°F), a pressurized rheometer should be used.

Peroxygen breakers useful in the practice of the present invention include sodium perborate, sodium carbonate peroxide, hydrogen peroxide, potassium diperphosphate and salts of monopersulfuric and dipersulfuric acid. It is generally preferable to use a peroxygen compound selected from ammonium and alkali metal salts of monopersulfuric acid and ammonium and alkali metal salts of dipersulfuric acid, alkali metal diperphosphates, t-butylhydroperoxide and hydrogen peroxide. Other breakers useful in the practice of the present invention include hypochlorite salts such as alkali metal hypochlorite salts, transition metal ions such as $Fe^{+2}$ and $Cu^{+2}$, and acids with a pKa less than 4. Suitable acids include sulfamic, hydrochloric and oxalic.

Gelling agents on which fracturing fluids may be based in the practice of the present invention include hydratable polysaccharides, polysaccharide derivatives, polyacrylamides, polyacrylamide copolymers, and polyvinyl alcohol. In addition to guar and HPG, other suitable fracturing fluids may include thickeners such as CMHPG and other guar derivatives, hydroxyethylcellulose (HEC), carboxymethyl hydroxyethylcellulose (CMHEC) and other cellulose derivatives, polyacrylamides and heteropolymers thereof, xanthan gum, and surfactant systems.

To assist those who wish to practice the present invention, Table I illustrates useful combinations of breakers, gelling agents, and scavengers. Using the method described above, other useful combinations may be readily determined.

EP 0 404 211 A1

## TABLE I

### BREAKER/GELLING AGENT/SCAVENGER COMBINATIONS

| Breaker | Gelling Agent | Scavenger |
|---|---|---|
| Peroxygen compounds such as persulfate | guar and derivatives; hydroxyethylcellulose and derivatives; polyacrylamide-based polymers; | dialkyldithiocarbamates such as sodium dimethyldithiocarbamate (SDD); reducing agents such as sodium thiosulfate; triethanolamine; unsaturated alcohols containing 6 or less carbons such as allyl alcohol (see U.S. Patent 4,552,675 incorporated herein by reference); phenols; hydroquinone |
| Hypoclorite salts such as NaOCl and LiOCl | guar and derivatives; hydroxyethylcellulose and derivatives; polyacrylamide-based polymers | dialkyldithiocarbmates such as sodium dimethyldithiocarbamate; reducing agents such as sodium thiosulfate |
| Transition metal ions such as $Fe^{+2}$ and $Cu^{+2}$ | guar and derivatives; hydroxyethylcellulose and derivatives | Complexing agents such as ethylenediamine tetraacetic acid and precipitating anions such as phosphate and sulfide |
|  | polyacrylamide-based polymers | 2,2' -azobis- (2-methyl) propanenitrile; 2,2' -azobis- (2-methyl) butanenitrile |
| Acid with pKA <4. | guar and derviations | base |

To further assist those who wish to practice the present invention, Table II illustrates the effect of scavengers according to the present invention with respect to a sodium hypochlorite breaker. These examples illustrate the effectiveness of the compositions and methods in the present invention in maintaining the viscosity of fracturing fluids in the presence of premature breaker release.

TABLE II

| Scavengers for NaOCl | | | |
|---|---|---|---|
| Breaker NaOCl lb/Mgal | Scavenger | Viscosity* 1 hour | Viscosity* 2 hour |
| 0.8 | none | 54 | 47 |
| 0.8 | 0.4 lb SDD/Mgal | 113 | 105 |
| 0.8 | 10 lb ST/Mgal | 128 | 128 |
| 0.8 | 1 gal TEA/Mgal | 23 | 23 |
| 0 | 0 | 164 | |
| SDD = sodium dimethyldithiocarbamate | | | |
| ST = sodium thiosulfate | | | |
| TEA = triethanolamine | | | |

*Test was run at 80° C (175° F). Samples were cooled to 24° C (75° F) for viscosity measurements made with a Fann 35-brand viscometer.

The following example is provided to further illustrate but not to limit the invention. Unless otherwise stated, all percentages are by weight.

6

EP 0 404 211 A1

## EXAMPLE

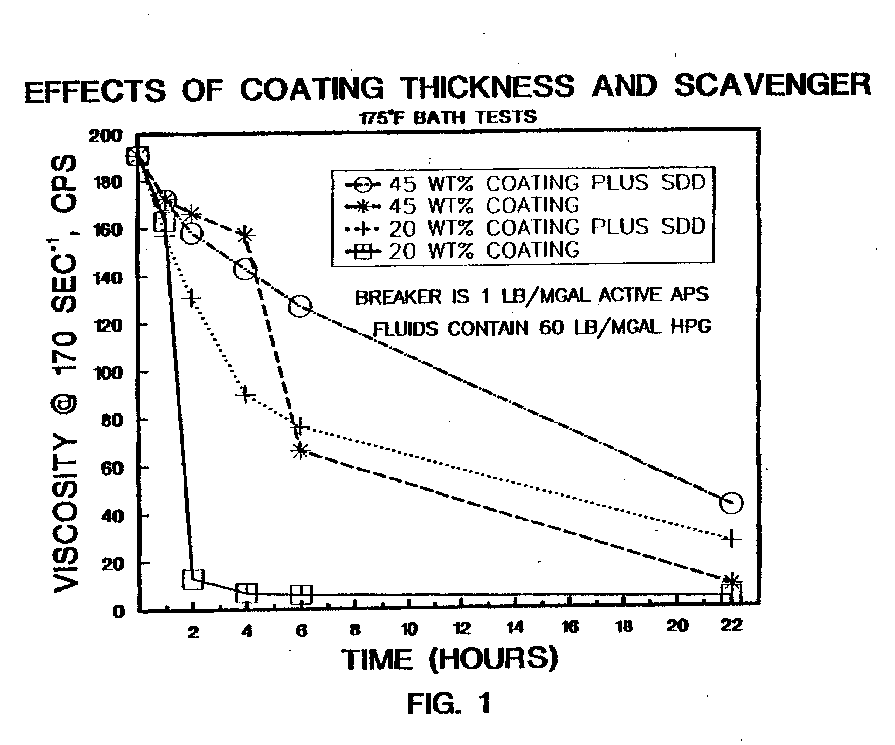

A base fluid solution was prepared which contained 60 lb HPG/Mgal, an antifoam agent, a bactericide and a surfactant in 2% KCl aqueous solution. The pH was adjusted to 9.5 with $Na_2CO_3$. Samples containing breaker, encapsulated or unencapsulated, and scavenger were added to glass bottles and placed in a shaker bath set at 80° C (175° F). At hourly intervals, the samples were removed, cooled and the viscosity measured at ambient temperature (24° C, 75° F). Figure 1 illustrates the benefit of encapsulation and the greater benefit of combining an encapsulated breaker with a scavenger. It also illustrates the cost-saving benefit of using a low level of coating plus a scavenger. The 20% coating plus scavenger system performs similarly to the 45% coating system, but is significantly less expensive.

It is understood that various other modifications will be apparent to and can readily be made by those skilled in the art without departing from the scope and spirit of this invention. Accordingly, it is not intended that the scope of the claims appended hereto be limited to the description as set forth herein, but rather that the claims be construed as encompassing all the features of patentable novelty that reside in the present invention, including all features that would be treated as equivalents thereof by those skilled in the art to which this invention pertains.

## Claims

1. A fracturing fluid composition, comprising:
a fracturing fluid;
a breaker present in said fracturing fluid for reducing the viscosity of said fracturing fluid;
an encapsulating material enveloping said breaker, said encapsulating material delaying release of said breaker into said fracturing fluid; and
a scavenging material present in said fracturing fluid for reacting with said breaker when said breaker is initially released into said fracturing fluid.

2. The fracturing fluid composition of claim 1 wherein said scavenging material reacts with the released breaker more rapidly than the released breaker reacts with the fracturing fluid.

3. The fracturing fluid composition of claim 1 wherein said scavenging material comprises sodium dimethyldithiocarbamate.

4. The fracturing fluid composition of claim 1 further comprising 0.5% to 3% KCl.

5. The fracturing fluid composition of claim 1 wherein said scavenging material comprises sodium thiosulfate.

6. The fracturing fluid composition of claim 1 wherein said scavenging material comprises triethanolamine.

7. The fracturing fluid composition of claim 1 wherein said scavenging material comprises an unsaturated alcohol containing not more than six carbon atoms.

8. The fracturing fluid composition of claim 1 wherein said scavenging material comprises a complexing agent.

9. The fracturing fluid composition of claim 1 wherein said scavenging material comprises an anion which forms an insoluble precipitate when said scavenging material reacts with said breaker.

10. The fracturing fluid composition of claim 1 wherein said scavenging material is selected from the group consisting of 2,2´-azobis-(2-methyl) propanenitrile and 2,2´-azobis-(2-methyl) butanenitrile.

11. A method of stimulating the production of hydrocarbons from subterranean formations penetrated by a wellbore, comprising:
injecting a fracturing fluid composition including a fracturing fluid; a breaker present in said fracturing fluid for reducing the viscosity of said fracturing fluid; an encapsulating material enveloping said breaker, said encapsulated material delaying release of said breaker into said fracturing fluid; and a scavenging material present in said fracturing fluid for reacting with said breaker when said breaker is initially released into said fracturing fluid into said wellbore, and
fracturing said subterranean formation to stimulate production of hydrocarbons.

12. The method of stimulating the production of hydrocarbons from subterranean formations set forth in claim 11 wherein said scavenging material reacts with the released breaker more rapidly than the released breaker reacts with the fracturing fluid.

13. The method of stimulating the production of hydrocarbons from subterranean formations set forth in claim 11 wherein said scavenging material comprises sodium dimethyldithiocarbamate.

7

14. The method of stimulating the production of hydrocarbons from subterranean formations set forth in claim 11 further comprising about 0.5% to about 3% KCl.

15. The method of stimulating the production of hydrocarbons from subterranean formations set forth in claim 11 wherein said scavenging material comprises sodium thiosulfate.

16. The method of stimulating the production of hydrocarbons from subterranean formations set forth in claim 11 wherein said scavenging material comprises triethanolamine.

17. The method of stimulating the production of hydrocarbons from subterranean formations set forth in claim 11 wherein said scavenging material comprises an unsaturated alcohol containing not more than six carbon atoms.

18. The method of stimulating the production of hydrocarbons from subterranean formations set forth in claim 11 wherein said scavenging material comprises a complexing agent.

19. The method of stimulating the production of hydrocarbons from subterranean formations set forth in claim 11 wherein said scavenging material comprises an anion which forms an insoluble precipitate when said scavenging material reacts with said breaker.

20. The method of stimulating the production of hydrocarbons from subterranean formations set forth in claim 11 wherein said scavenging material is selected from the group consisting of 2,2′-azobis-(2-methyl) propanenitrile and 2,2′-azobis-(2-methyl) butanenitrile.

# EFFECTS OF COATING THICKNESS AND SCAVENGER

175°F BATH TESTS

Legend:
- 45 WT% COATING PLUS SDD
- 45 WT% COATING
- 20 WT% COATING PLUS SDD
- 20 WT% COATING

BREAKER IS 1 LB/MGAL ACTIVE APS

FLUIDS CONTAIN 60 LB/MGAL HPG

Y-axis: VISCOSITY @ 170 SEC⁻¹, CPS

X-axis: TIME (HOURS)

FIG. 1

EP 0 404 211 A1

**EFFECTS OF KCl ON FLUID W/SDD AND APS**

0.1 LB/MGAL APS, 0.5 LB/MGAL SDD, 175°F

Legend:
- ⊖ 0% KCl
- ✳ 0.1% KCl
- + 0.5% KCl
- ⊞ 2% KCl

FLUIDS CONTAIN 60 LB/MGAL HPG

VISCOSITY @ 170 SEC⁻¹, CPS

TIME (HOURS)

FIG. 2

EP 0 404 211 A1

# EFFECT OF SDD CONCENTRATION
## 175°F BATH TESTS

FLUIDS CONTAIN 0.3 LB/MGAL APS AND 60 LB/MGAL HPG

Legend:
- — 3.0 LB/MGAL SDD
- ⊖ 1.5 LB/MGAL SDD
- ✳ 0.9 LB/MGAL SDD
- ·+· 0.3 LB/MGAL SDD
- ⊞ 0.1 LB/MGAL SDD

Y-axis: VISCOSITY @ 170 SEC⁻¹, CPS

X-axis: TIME (HOURS)

FIG. 3

EP 0 404 211 A1

EFFECT OF SDD CONCENTRATION

195°F BATH TESTS

FLUIDS CONTAIN 0.3 LB/MGAL APS AND 60 LB/MGAL HPG

Legend:
— 3.0 LB/MGAL SDD
-⊖- 1.5 LB/MGAL SDD
-*- 0.9 LB/MGAL SDD
··+·· 0.3 LB/MGAL SDD
-⊞- 0.1 LB/MGAL SDD

X-axis: TIME (HOURS)

Y-axis: VISCOSITY @ 170 SEC⁻¹, CPS

FIG. 4

EP 0 404 211 A1

# PERFORMANCE OF SDD AND ST
## 175°F BATH TESTS

FLUIDS CONTAIN 1 LB/MGAL APS (ENCAPSULATED),

60 LB/MGAL HPG, AND 2% KCl

Legend:
- —*— 5 LB/MGAL ST
- ·+· 0.3 LB/MGAL SDD
- —⊞— 0.5 LB/MGAL SDD

Y-axis: VISCOSITY @ 170 SEC⁻¹, CPS

X-axis: TIME (HOURS)

## FIG. 5

EP 0 404 211 A1

EFFECTS OF SCAVENGERS ON APS
175°F BATH TESTS

FIG. 6

EP 0 404 211 A1

# EFFECTS OF SCAVENGERS ON APS

## 175°F BATH TESTS

FIG. 7

EP 0 404 211 A1

**European Patent Office**

## EUROPEAN SEARCH REPORT

EP 90201074.3

### DOCUMENTS CONSIDERED TO BE RELEVANT

| Category | Citation of document with indication, where appropriate, of relevant passages | Relevant to claim | CLASSIFICATION OF THE APPLICATION (Int Cl⁵) |
|---|---|---|---|
| D,A | US - A - 4 552 675 (BROWN et al.) * Totality * | 1,2,11 | E 21 B 43/26 |
| D,A | US - A - 4 506 734 (NOLTE) * Totality * | 1,2,11 | |
| A | US - A - 4 436 156 (FREDERICKSON) * Claims; table 1 * | 1,4 | |
| D,A | US - A - 4 202 795 (BURNHAM et al.) * Totality * | 1 | |
| D,A | US - A - 4 741 401 (WALLES et al.) * Totality * | 1,2,11 | |
| A | US - A - 3 760 881 (KIEL) * Totality * | 1,2,4 | TECHNICAL FIELDS SEARCHED (Int Cl⁵) |
| A | US - A - 3 779 914 (NIMERICK) * Totality * | 1,2, 11,12 | C 09 K 3/00 E 21 B 43/00 |
| A | US - A - 3 818 991 (NIMERICK) * Totality * | 1,2 | |

The present search report has been drawn up for all claims

| Place of search | Date of completion of the search | Examiner |
|---|---|---|
| VIENNA | 02-08-1990 | DRNOWITZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82